# EUROPÄISCHE PATENTSCHRIFT

(11) **EP 1 055 152 B1**
(45) Veröffentlichungstag und Bekanntmachung des Hinweises auf die Patenterteilung: **24.07.2002**
(21) Anmeldenummer: 99908877.6
(22) Anmeldetag: 11.02.1999
(51) Int. Cl.: G03B 37/00, G03B 21/00

(54) **VORRICHTUNG FÜR EINE WEITWINKELPROJEKTION**
DEVICE FOR WIDE-ANGLE PROJECTION
DISPOSITIF POUR PROJECTION GRAND ANGLE

(30) Priorität: 11.02.1998 DE 19805507
(43) Veröffentlichungstag der Anmeldung: 29.11.2000
(73) Patentinhaber: Dataframe Vertrieb Audiovisueller Kommunikationssysteme GmbH, 82178 Puchheim (DE)
(72) Erfinder: MAYR, Peter, D-82140 Olching (DE)
(74) Vertreter: Hano, Christian, Dipl.-Ing.
(86) Internationale Anmeldenummer: EP9900897
(87) Internationale Veröffentlichungsnummer: WO9941641

(56) Entgegenhaltungen:
- US-A- 4 464 029
- US-A- 5 253 116

## Beschreibung

Die Erfindung betrifft ein Verfahren und eine Vorrichtung für eine Weitwinkelprojektion, die insbesondere für eine Simulation eines Towers auf einem Flughafen verwendet werden können.

Es ist aus dem Stand der Technik bekannt, für eine Weitwinkelprojektion Projektoren mit einer Fischaugenoptik zu verwenden, durch die das den Projektor verlassende Licht aufgeweitet wird. Die Herstellung dieser Fischaugenoptiken ist jedoch sehr aufwendig und erfordert höchste Präzision. Darüber hinaus entsteht bei der Verwendung einer Fischaugenoptik ein erheblicher Lichtverlust durch das Linsensystem.

US-A-4 464 029 beschreibt eine Vorrichtung für eine Weitwinkelprojektion mit einem Projektor, einem sphärisch konvexen Spiegel und einer sphärisch konkaven Leinwand. Eine ähnliche Vorrichtung ist aus US-A-5 253 116 bekannt.

Die Vorrichtung für eine Weitwinkelprojektion gemäß dem Patentanspruch 1 unterscheidet sich von der aus der US 4,464,029 bekannten Vorrichtung dadurch, daß die Krümmungsmittelpunkte der Spiegelfläche und der Leinwand übereinstimmen. Hierdurch wird eine sehr hohe Bildqualität auf der Leinwand erreicht.

Bei der aus der US 4,464,029 bekannten Vorrichtung befindet sich der Spiegel auf dem Krümmungsmittelpunkt der Leinwand. Der Krümmungsmittelpunkt des Spiegels ist sehr weit von dem Krümmungsmittelpunkt der Leinwand entfernt.

Bei dem aus der US 5,253,116 bekannten Stand der Technik ist die sphärische Leinwand konvex und die sphärische Spiegelfläche konkav ausgebildet. Die Lage der Krümmungsmittelpunkte der Leinwand und des Spiegels ist in dieser Druckschrift nicht angegeben. Den Zeichnungen läßt sich jedoch entnehmen, daß die Krümmungsmittelpunkte weit von einander entfernt sind.

Der Erfindung liegt die Aufgabe zugrunde, mit konstruktiv einfachen Mitteln ein Verfahren und eine Vorrichtung zu schaffen, die eine Weitwinkelprojektion mit wenig Lichtstärkenverlust ermöglichen.

Die Aufgabe wird auch durch eine Vorrichtung gelöst wie sie in den Ansprüchen dargestellt ist.

Der sphärisch konvexe Spiegel ermöglicht eine extreme Aufweitung des Lichtkegels, wodurch mit wenig Lichtstärkenverlust eine enorme Bildgröße bei geringem Abstand des Projektors bewirkt wird.

Die beste Bildqualität wird erreicht, wenn die Krümmungsmittelpunkte der Spiegelfläche und der Leinwand übereinstimmen oder nahe zueinander liegen.

Eventuell entstehende Bildverzerrungen auf der Leinwand können durch entsprechende Leinwandform oder Bildvorverzerrung ausgeglichen werden.

Als Projektoren werden vorzugsweise rechnergesteuerte Lichtventilprojektoren verwendet.

Ein Ausführungsbeispiel der Erfindung wird nachstehend anhand der Zeichnungen näher erläutert. Es zeigen
- Fig. 1: eine im Querschnitt eine Vorrichtung für eine Weitwinkelprojektion, die zur Simulation eines Flughafentowers dient;
- Fig. 2: eine Draufsicht auf die Vorrichtung von Fig. 1;
- Fig. 3: eine Vorderansicht eines in der Vorrichtung von Fig. 1 verwendeten Spiegels;
- Fig. 4: den Schnitt II-II von Fig. 3;
- Fig. 5: den Schnitt III-III von Fig. 3.

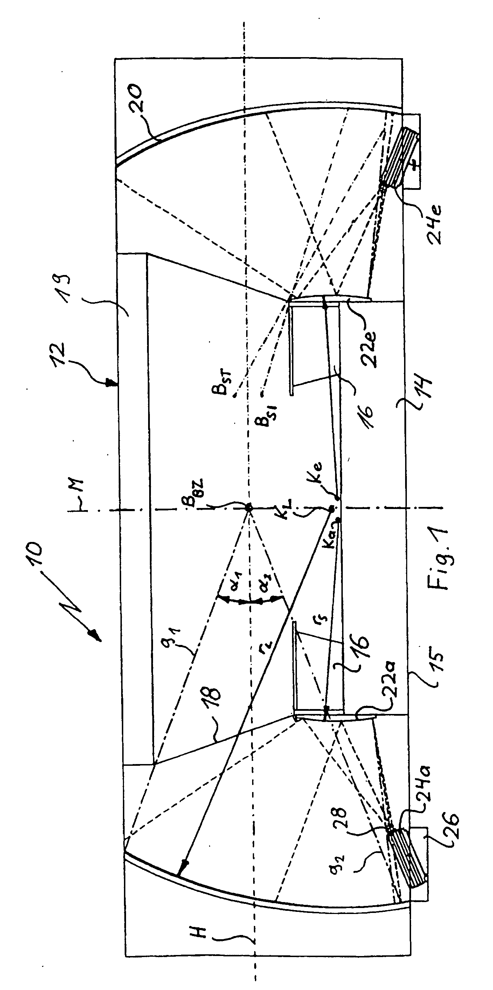

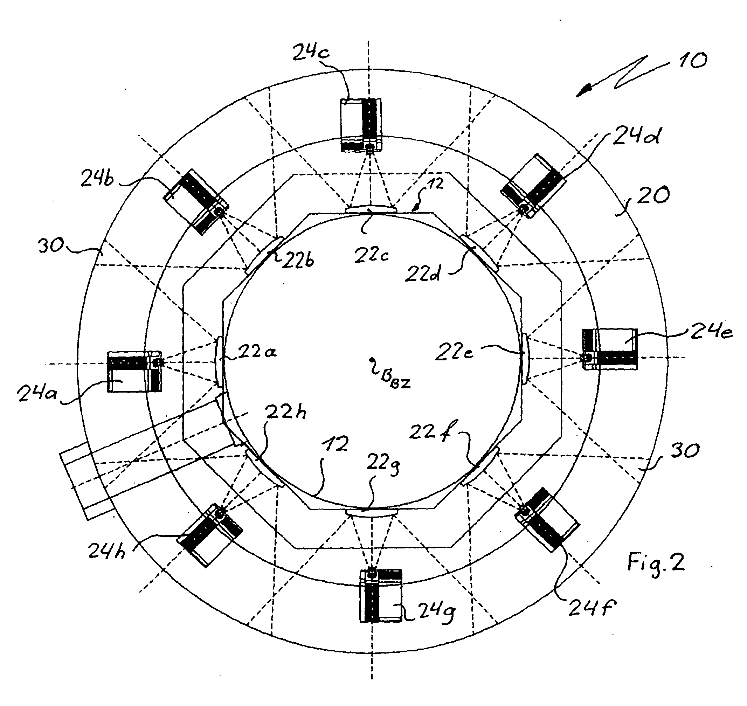

Die in den Fig. 1 und 2 gezeigte Vorrichtung 10 zur Weitwinkelprojektion simuliert die Umgebung eines Flughafen-Towers und dient zur Ausbildung von Fluglotsen. Die Vorrichtung 10 umfaßt einen Towernachbau 12, dessen Außenkontur im Querschnitt (Fig. 2) die Form eines gleichmäßigen Achtecks hat.

Der Towernachbau 12 weist einen auf einem Boden 15 angeordneten Sockel 14 auf, dessen Oberfläche eine Plattform bildet, auf der längs ihres Umfangs Bedienpulte 16 angeordnet sind. Angrenzend an die Oberkante der Bedienpulte 16 weist der Towernachbau 12 einen sich konisch nach außen erweiternden Fensterbereich 18 auf, an den eine waagerecht angeordnete Decke 19 anschließt. Der Towernachbau 12 wird von einer koaxial zum Towernachbau 12 angeordneten Leinwand 20 umgeben, die sphärisch konkav ausgebildet ist und sich vom Boden 15 der Vorrichtung 10 bis zur Höhe der oberen Oberfläche der Decke 19 erstreckt.

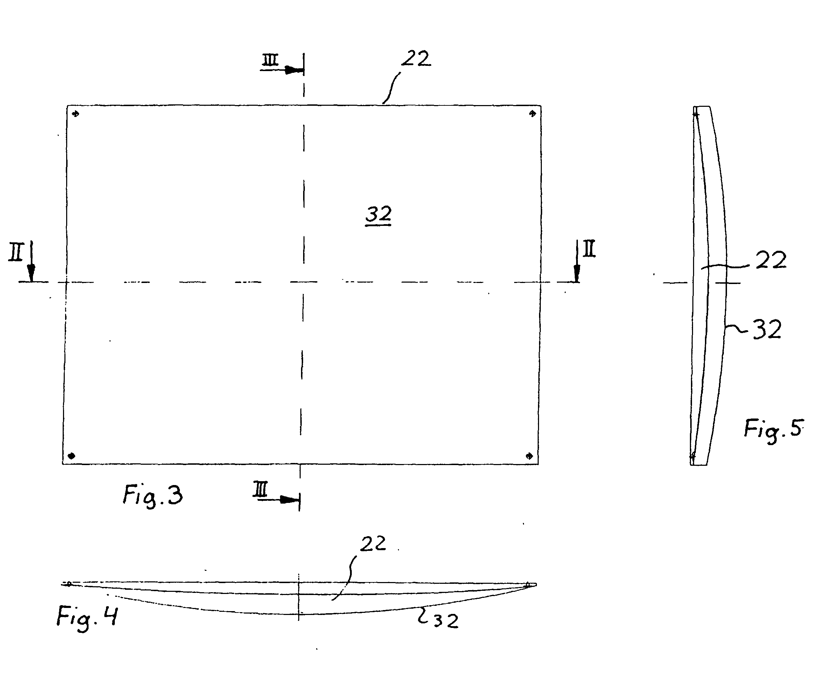

Auf jedem Flächenabschnitt der Außenkontur des Towernachbaus 12 ist nach unten an den Fensterbereich 18 angrenzend zentral ein Spiegel 22a bis 22e befestigt. Jeder Spiegel 22a bis 22e weist auf seiner der Leinwand 20 zugewandten Seite eine sphärisch konvexe Spiegelfläche 32 (Fig. 4, Fig. 5) auf. Zwischen jedem Spiegel 22a bis 22e und der Leinwand 20 ist jeweils ein Projektor 24a bis 24e in einer an die Leinwand 20 angrenzenden Vertiefung 26 in dem Boden 15 angeordnet. Jeder Projektor 24a bis 24e weist ein Objektiv 28 auf, das in Richtung der Mittelachse M auf den jeweiligen Spiegel 22a bis 22e schräg nach oben gerichtet ist.

Zur Auslegung der Vorrichtung 10 wurde ein Bezugsblickpunkt B_{BZ} herangezogen, der auf der Mittelachse M des Towernachbaus auf einer Höhe zwischen einem Blickpunkt B_{ST} einer an einem Bedienpult 16 stehenden Person und einem Blickpunkt B_{SI} einer an dem Bedienpult sitzenden Person liegt. Die Höhe der Leinwand 20 und ihr Abstand von dem Bezugsblickpunkt B_{BZ} sind so gewählt, daß sich die Leinwand zwischen zwei Geraden g₁ und g₂ erstreckt, wobei die Gerade g₁ sich von dem Bezugsblickpunkt B_{BZ} aus in einem Winkel α₁ zu der sich durch den Bezugsblickpunkt B_{BZ} erstreckenden Horizontalen H nach oben erstreckt. Die Gerade g₂ erstreckt sich von dem Bezugsblickpunkt B_{BZ} aus in einem Winkel α₂ zur Horizontalen H nach unten. Vorzugsweise betragen die Winkel α₁ und α₂ jeweils 20°.

Der Abstand eines Projektors 24 von dem zugehörigen Spiegel 22 ist so gewählt, daß jeder Spiegel 22 den vollen Lichtkegel eines Projektors 24 auf die Leinwand 20 so umlenken kann, daß sich die von zwei benachbarten Spiegeln 22 auf die Leinwand 20 umgelenkten Lichtkegel nur in einem kleinen Bereich 30 (Fig. 2) auf der Leinwand 20 überschneiden.

Die besten Abbildungsergebnisse werden erreicht, wenn die Krümmungsmittelpunkte Kₐ bis Kₑ der Spiegel 22a bis 22e sehr nahe an dem Krümmungsmittelpunkt K_{L} der Leinwand 20 befinden, der auf der Mittelachse M liegt, wie es in Fig. 1 gezeigt ist. Im Idealfall stimmen die Krümmungsmittelpunkte Kₐ bis Kₑ mit dem Krümmungsmittelpunkt K_{L} überein.

Die Projektoren 24a bis 24e sind so angeordnet, daß sie von den Blickpunkten B_{ST} und B_{SI} aus nicht zu erkennen sind, so daß eine Person an dem Bedienpult 16 einen freien Blick auf die Leinwand 20 hat.

Die einzelnen Projektoren 24a bis 24e werden von einem Rechner so gesteuert, daß sie auf der Leinwand 20 ein simuliertes Rundumbild erzeugen, das einer 360°-Ansicht aus einem Flugzeugtower entspricht.

Bei einer bevorzugten Ausführungsform der Vorrichtung zur Weitwinkelprojektion stimmen der Krümmungsmittelpunkt K_{L} der Leinwand 20 und die Krümmungsmittelpunkte Kₐ bis Kₑ der Spiegel 22a bis 22e überein. Der Krümmungsradius rₛ der Spiegel beträgt ungefähr 3,34 m. Der Krümmungsradius K_{L} der Leinwand beträgt ca. 6,45 m.

Die Leinwand 20 besteht beispielsweise aus feuerhemmendem Glasfaserkunststoff und ist mattweiß beschichtet.

Die Ausbildung der Spiegel 22 ist in Fig. 3 bis 5 näher gezeigt. Der Spiegel 22 wird von einem Kugelsegment mit rechteckiger Außenkontur (Fig. 3) gebildet. Er besteht vorzugsweise aus auf der Spiegelfläche 32 polierten Aluminium, das mit Chrom beschichtet ist. Es ist jedoch auch möglich, Spiegel mit einer geschliffenen Glasoberfläche zu verwenden. Eine weitere Möglichkeit ist eine auf einem runden Rahmen gespannten Mylarfolie, die mittels Luftdruck nach außen gewölbt wird, um die konvexe Form zu erreichen.

Mit der beschriebenen Vorrichtung zur Weitwinkelprojektion ist es möglich, eine Geometrie auf 10 Bogenminuten genau auf der Leinwand abzubilden. Durch die Spiegel 22a bis 22e findet eine extreme Strahlaufweitung statt. Der Lichtverlust durch die Spiegel 22a bis 22e beträgt lediglich ca. 10%.

## Patentansprüche

1. Vorrichtung für eine Weitwinkelprojektion mit wenigstens einem Projektor (24), vor dessen Objektiv (28) ein Spiegel (22) mit einer sphärisch konvex ausgebildeten Spiegelfläche (32) angeordnet ist, wobei die Spiegelfläche (32) einer im wesentlichen sphärisch konkav geformten Leinwand (20) zugewandt ist, **dadurch gekennzeichnet, daß** die Krümmungsmittelpunkte (Kₐ, Kₑ; K_{L}) der Spiegelfläche (32) und der Leinwand (20) übereinstimmen.

2. Vorrichtung für eine Weitwinkelprojektion nach Anspruch 1, **dadurch gekennzeichnet, daß** der Projektor (24) so angeordnet ist, daß er für einen Betrachter der Leinwand (20) unsichtbar ist.

3. Vorrichtung für eine Weitwinkelprojektion nach Anspruch 1, **dadurch gekennzeichnet, daß** als Projektor (24) ein Lichtventilprojektor verwendet wird.

4. Vorrichtung zur Towersimulation, mit
- einem zentral angeordeten Towernachbau (12),
- mehreren Projektoren (24) mit Objektiven (28), die in gleichmäßigem Winkelabstand um den Towernachbau (12) herum angeordnet sind, wobei die Objektive (28) dem Towernachbau (12) zugewandt sind,
- mehreren in gleichmäßigem Winkelabstand um den Towernachbau (12) herum angeordneten Spiegeln (22), die jeweils vor dem Objektiv (28) eines Projektors (24) angeordnet sind und eine von dem Towernachbau (12) abgewandte sphärisch konvex ausgebildete Spiegelfläche (32) aufweisen, und
- einer den Towernachbau (12), die Projektoren (24) und die Spiegel (22) umgebenden sphärisch konkav ausgebildeten Leinwand (20),

5. Vorrichtung nach Anspruch 4, **dadurch gekennzeichnet, daß** die Krümmungsmittelpunkte (Kₐ, Kₑ; K_{L}) der Spiegelfläche (32) und der Leinwand (20) übereinstimmen.

## Claims

1. Device for wide-angle projection comprising at least one projector (24), in front of the lens (28) thereof a mirror (22) having a spherically convex mirror surface (32) is arranged, the mirror surface (32) facing a substantially spherically concave screen (20), **characterized in that** the centers of curvature (Kₐ; Kₑ; K_{L}) of the mirror surface (32) and the screen (20) correspond to each other.

2. Device for wide-angle projection in accordance with claim 1, **characterized in that** the projector (24) is arranged such that it is invisible for someone observing the screen (20).

3. Device for wide-angle projection in accordance with claim 1, **characterized in that** a light valve projector is used as the projector (24).

4. Device for tower simulation purposes, comprising
- a centrally arranged tower imitation (12),
- several projectors (24) comprising lenses (28), which are arranged around the tower imitation (12) at an even angular distance, the lenses (28) facing the tower imitation (12),
- several mirrors (22) arranged around the tower imitation (12) at an even angular distance, the mirrors (22) being arranged, respectively, in front of the lens (28) of a projector (24) and having a spherically convex mirror surface (32) that faces away from the tower imitation (12), and
- a spherically concave screen (20) that surrounds the tower imitation (12), the projectors (24) and the mirrors (22).

5. Device according to claim 4, **characterized in that** the centers of curvature (Kₐ; Kₑ; K_{L}) of the mirror surface (32) and of the screen (20) correspond to each other.

## Revendications

1. Dispositif pour projection grand angle, muni d'au moins un projecteur (24), devant l'objectif (28) duquel est placé un miroir (22) ayant une surface de miroir (32) formée de manière sphérique convexe, la surface de miroir (32) étant tournée vers un écran de projection (20) essentiellement formé de manière sphérique concave, **caractérisé en ce que** les centres de courbure (Kₐ ; Kₑ ; K_{L}) de la surface de miroir (32) et de l'écran de projection (20) coïncident.

2. Dispositif pour projection grand angle selon la revendication 1, **caractérisé en ce que** le projecteur (24) est placé de telle manière qu'il est invisible à tout observateur de l'écran de projection (20).

3. Dispositif pour projection grand angle selon la revendication 1, **caractérisé en ce qu'**un projecteur à valve optique est utilisé comme projecteur (24).

4. Dispositif pour la simulation d'une tour de contrôle, avec
- une reproduction d'une tour de contrôle (12) placée de manière centrale
- plusieurs projecteurs (24) avec objectifs (28) installés à écart angulaire régulier autour de la reproduction d'une tour de contrôle (12), les objectifs (28) étant tournés vers la reproduction d'une tour de contrôle (12),
- plusieurs miroirs (22) placés à écart angulaire régulier autour de la reproduction d'une tour de contrôle (12), installés respectivement devant l'objectif (28) d'un projecteur (24) et présentant une surface de miroir (32) formée de manière sphérique convexe et détournée de la reproduction d'une tour de contrôle (12), et
- un écran de projection (20) formé de manière sphérique concave et entourant la reproduction d'une tour de contrôle (12), les projecteurs (24) et les miroirs (22).

5. Dispositif selon la revendication 4, **caractérisé en ce que** les centres de courbure (Kₐ ; Kₑ ; K_{L}) de la surface de miroir (32) et de l'écran de projection (20) coïncident.
